# FASCICULE DE BREVET EUROPEEN

(11) **EP 3 148 823 B1**
(45) Date de publication et mention de la délivrance du brevet: **21.04.2021**
(21) Numéro de dépôt: 14827474.9
(22) Date de dépôt: 05.12.2014
(51) Int. Cl.: B60G 7/00

(54) **BRAS DE SUSPENSION POUR VEHICULE AUTOMOBILE**
FAHRWERKSLENKER FÜR EIN FAHRZEUG
SUSPENSION ARM FOR A VEHICLE

(30) Priorité: 12.12.2013 FR 1362502
(43) Date de publication de la demande: 05.04.2017
(73) Titulaire: Renault S.A.S., 92100 Boulogne-Billancourt (FR)
(72) Inventeur: GANDON, Fabrice, F-72550 Coulans sur Gee (FR); HEURTAULT, Philippe, F-72560 Change (FR); GALLO, Emmanuel, F-72000 Le Mans (FR); SAUDEMONT, Yoann, F-28210 Les Pinthieres (FR)
(86) Numéro de dépôt international: PCT/FR2014/053185
(87) Numéro de publication internationale: WO 2015/086962

(56) Documents cités:
- EP-A1- 2 399 765
- JP-A- H05 112 111

## Description

La présente invention concerne un bras de suspension pour véhicule automobile, ainsi qu'un véhicule équipé d'un tel bras.

Traditionnellement, un bras de suspension est un organe de châssis qui relie un support de roue (avant ou arrière) d'un véhicule tel qu'un porte fusée, à la caisse du véhicule ou à un berceau fixé à la caisse. Un exemple de bras de suspension connu est divulgué dans le document JP H05 112111 A.

Plus précisément, le bras de suspension s'étend transversalement depuis le châssis auquel il est fixé par une liaison pivot ou rotule, vers une roue du véhicule à laquelle il est relié par le biais du porte fusée, lequel étant apte à assurer la rotation de la roue.

Cette liaison pivot est assurée par une rotule comprise dans un logement au niveau du bras de suspension, qui est reliée au support de roue par l'intermédiaire d'une queue ou bras de rotule.

Un tel bras de suspension est prévu pour autoriser un mouvement vertical et de recul de la roue par rapport au châssis du véhicule de sorte à assurer un maximum de confort aux occupants en absorbant au moins une partie des forces statiques et dynamiques transversales et longitudinales qui s'exercent sur la roue du véhicule, en particulier lors du déplacement de ce dernier.

Ce bras de suspension autrement appelé triangle de suspension du fait de sa forme triangulaire, comporte donc deux liaisons pivots à axe longitudinaux et/ou verticaux confondus sur le châssis et la liaison pivot ou rotule sur le porte-fusée de la roue auquel il est relié.

Dans l'optique de renforcer la rigidité de ce type de bras de suspension, il est connu qu'il soit formé d'un bras, comme par exemple un bras inférieur, et d'un élément de support de rotule également appelé boîtier de rotule ou encore palette. L'élément de support de rotule est monté solidaire sur une extrémité du bras inférieur orienté vers la roue en étant fixé par des éléments de maintien au niveau d'une zone de liaison du bras de suspension.

Cependant, ce type de bras de suspension présente un inconvénient majeur lorsque la roue à laquelle il est relié subit un choc latéral ou longitudinal. En effet, l'énergie résultant d'un tel choc est en partie absorbée par le bras de suspension au niveau de la zone de liaison qui est susceptible de subir une déformation plastique de type pliage provoquant alors le décapsulage de la rotule de son logement, ce terme signifiant une désolidarisation du pivot de rotule de son boîtier. Un tel décapsulage rend le véhicule inopérant et peut être à l'origine d'accident grave car le véhicule devient incontrôlable après un tel choc avec le bras de suspension monté au niveau du train avant du véhicule.

La présente invention a pour objet de remédier en tout ou partie aux différents inconvénients cités précédemment.

Un des objectifs de l'invention est donc de proposer un bras de suspension pour véhicule automobile qui permette d'éviter ce risque d'endommagement, notamment lors d'un choc latéral ou longitudinal.

Un avantage du bras de suspension selon l'invention est de présenter des caractéristiques qui autorisent sa mise en œuvre pour différents modèles de véhicules ayant notamment des masses différentes.

L'invention concerne un bras de suspension pour véhicule automobile formé d'un bras, un élément de support de rotule et des éléments de maintien formant des points de fixation du bras avec l'élément de support, dans lequel au moins deux plans tangents à l'interface de fixation au niveau de deux éléments de maintien sont distincts, et la zone de liaison présente une section transversale en forme de Ω.

Dans d'autres modes de réalisation:
- le bras comporte une partie creuse ayant un fond pourvu d'une ouverture ;
- le bras comporte trois extrémités ;
- chaque rebord comporte une deuxième aile dont la hauteur évolue le long du bras ;
- le fond de la partie creuse est formé de première et deuxième parties présentant des profondeurs différentes, lesquelles sont reliées entre elles par un embouti intérieur ;
- la zone de liaison est formée par des zones de montage de l'élément de support et de la première extrémité du bras, lesquelles zones de montage ont des formes complémentaires ;
- le bras comprend trois parties de fixation dont deux sont comprises dans un même plan, et
- le bras de suspension a une forme sensiblement triangulaire.

L'invention concerne aussi un véhicule comprenant un tel bras de suspension.

D'autres avantages et caractéristiques de l'invention apparaîtront mieux à la lecture de la description d'un mode de réalisation préféré qui va suivre, en référence aux figures, réalisé à titre d'exemple indicatif et non limitatif :
- la figure 1 est une vue de profil d'un bras de suspension selon le mode de réalisation de l'invention ;
- la figure 2 est une vue de dessous du bras de suspension selon le mode de réalisation de l'invention, et
- les figures 3 et 4 sont des vues du bras de suspension selon le mode de réalisation de l'invention, déformé après un choc ;
- la figure 5 est une vue schématique d'une coupe partielle selon une ligne A1-A1 de la figure 1 d'une interface de fixation du bras de suspension selon le mode de réalisation de l'invention, et
- la figure 6 est une autre vue schématique d'une coupe partielle d'une variante de l'interface de fixation du bras de suspension selon le mode de réalisation de l'invention.

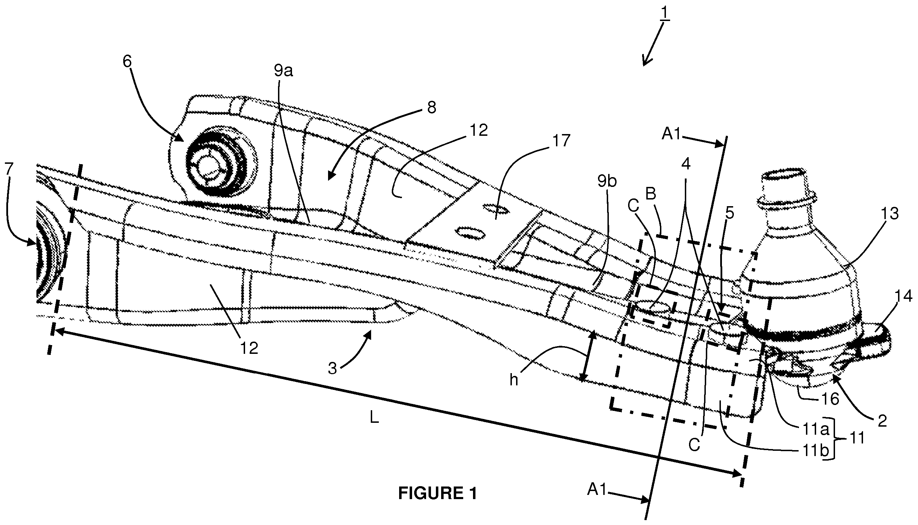

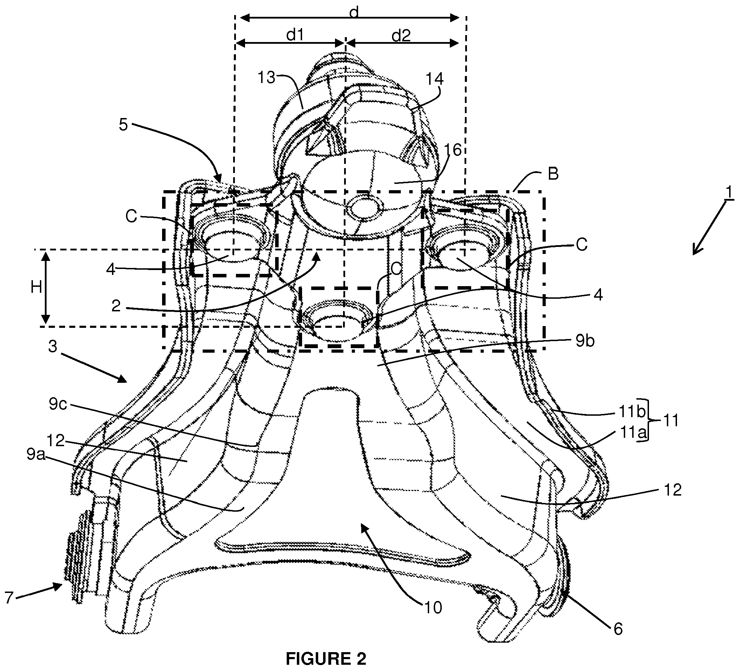

Sur les figures 1 et 2, le bras de suspension 1 est formé d'un bras 3, par exemple ici un bras inférieur, ayant la forme d'un triangle sensiblement isocèle et d'un élément de support 2 de rotule. Ce bras de suspension 1 a donc également une forme sensiblement triangulaire.

Le bras inférieur 3 comporte trois extrémités 5, 6, 7 et une partie creuse 8, et est pourvu de deux rebords 11 latéraux qui s'étendent de la première extrémité 5 à chacune des deuxième 6 et troisième 7 extrémités.

Les deuxième 6 et troisième 7 extrémités sont fixées au châssis en rotation autour d'un axe sensiblement longitudinal, par exemple en étant reliées à un longeron (non représenté) du châssis.

La première extrémité 5 de ce bras inférieur 3 est orientée vers la roue du véhicule, suivant un axe s'étendant sensiblement selon l'axe longitudinal de ce bras inférieur 3. Elle comporte une zone de montage pourvue d'orifices, lorsque l'élément de support 2 de rotule doit être monté solidaire à ce bras inférieur 3 par boulonnage ou rivetage, comme décrit par la suite.

Le bras de suspension 1 comporte une zone de liaison B, visible sur la figure 1, au niveau de laquelle l'élément de support 2 est rapporté à la première extrémité 5 du bras inférieur 3. Cette zone de liaison B comporte au moins deux parties de fixation C. Ces parties de fixation C sont donc des portions de la zone de liaison B qui sont aptes à coopérer avec les éléments de maintien 4 afin que l'élément de support 2 soit maintenu fixé mécaniquement au bras inférieur 3.

Dans ce mode de réalisation, cette zone de liaison B comporte trois parties de fixation C visibles sur la figure 2, lesquelles parties C comprennent chacune un élément de maintien 4. Ces éléments de maintien 4 permettent d'assurer un assemblage solidaire de l'élément de support 2 au bras inférieur 3 au niveau des parties de fixation C par rivetage, boulonnage ou encore par soudage.

La partie creuse 8 du bras inférieur 3 a la forme d'une cuvette en présentant une section transversale en forme de U. Le fond de cette partie creuse 8 est relié par des parois 12 aux deux rebords 11 latéraux.

Ce fond est pourvu d'une ouverture 10 permettant par exemple d'évacuer un fluide comme de l'eau, qui pourrait être compris dans la partie creuse 8 de ce bras inférieur 3. La forme de cette ouverture 10 est de manière non limitative sensiblement triangulaire.

Le fond de cette partie creuse 8 est constitué de deux parties 9a, 9b, notamment visibles sur la figure 2, présentant des profondeurs différentes et qui sont reliées entre elles par un embouti intérieur 9c.

La première partie 9a de ce fond présente une profondeur plus importante que celle de la deuxième partie 9b. Sur la figure 2, on remarquera notamment que la profondeur de la première partie 9a de ce fond est sensiblement constante alors que celle de la deuxième partie 9b du fond décroit à mesure que l'on s'approche de la première extrémité 5 du bras inférieur 3. Cette deuxième partie 9b est inclinée en comparaison avec la première partie 9a de ce fond.

En effet, chacune de ces première 9a et deuxième 9b parties est contenue dans un plan. Ces plans forment entre eux un angle compris entre environ 0 et 5 degrés, de préférence 3 degrés. La définition de cet angle permet notamment de configurer la résistance au choc du bras de suspension 1.

Sur les figures 1 et 2, chaque rebord 11 du bras inférieur 3 est formé de deux ailes 11a, 11b. Plus précisément, elle comprend la première aile 11a pouvant être sensiblement horizontale et/ou plane reliant chaque paroi 12 à la deuxième aile 11b sensiblement verticale et/ou plane. Chaque première aile 11a peut être perpendiculaire à la fois à la deuxième aile 11b et à la paroi 12 de la partie creuse 8. La deuxième aile 11b est alors sensiblement parallèle à la paroi 12 de la partie creuse 8 du bras inférieur 3 à laquelle elle est reliée à partir de cette première aile 11a.

Le bras inférieur 3 est réalisé en matériau métallique. Il est de préférence formée d'une ou de plusieurs feuilles de tôle.

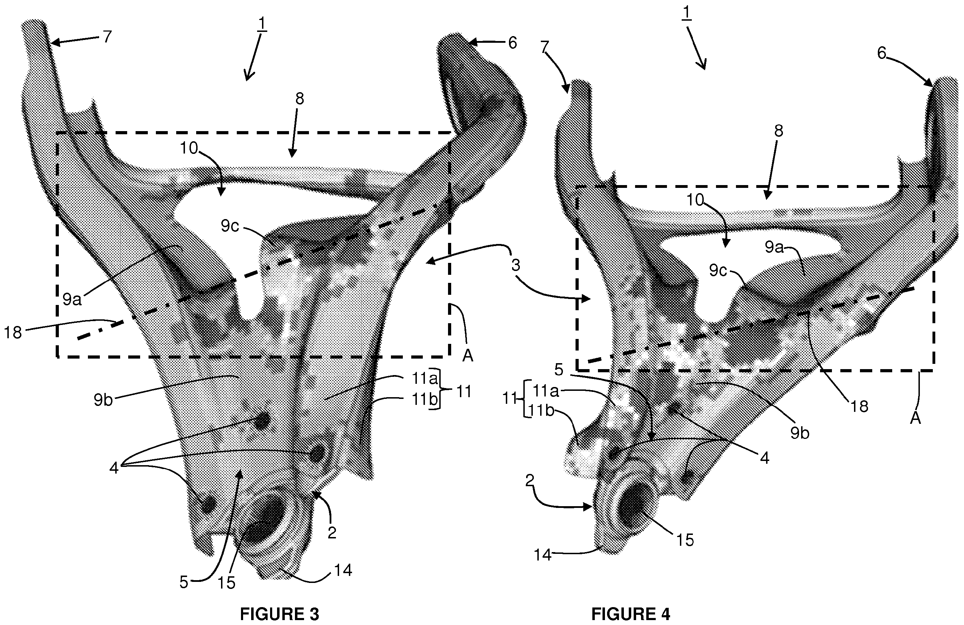

Ainsi que nous l'avons vu, l'élément de support 2 est monté solidaire avec le bras inférieur 3 à partir d'éléments de maintien 4 agencés au niveau de des parties de fixation C de la zone de liaison B. Cet élément de support 2 visible sur les figures 3 et 4, est pourvu d'une zone de montage et d'un logement 15 prévu pour recevoir une rotule 13.

La zone de montage de cet élément de support 2 présente une forme qui est complémentaire à celle de la première extrémité 5 du bras inférieur 3. Autrement dit, la zone de montage de l'élément de support 2 épouse parfaitement la forme des parois 12 et des deux premières ailes 11a présentes au niveau de cette première extrémité 5 ainsi que celle d'une portion de la deuxième partie 9b du fond de la partie creuse 8 située au niveau de la zone de montage de ce bras inférieur 3.

La zone de liaison B du bras de suspension 1 qui est constituée par l'assemblage des zones de montage de l'élément de support 2 et du bras inférieur 3, présente alors une section transversale en forme de Ω qui permet d'augmenter l'inertie localement au niveau de cette zone B du bras de suspension 1.

Lorsque l'élément de support 2 est monté solidaire au bras inférieur 3 par boulonnage, il est alors pourvu d'orifices au niveau de sa zone de montage.

Dans une telle configuration, les éléments de maintien 4 sont des vis coopérant avec des écrous, lesquelles vis sont aptes à traverser les orifices aménagés dans les zones de montage du bras inférieur 3 et de l'élément de support 2 lorsque les orifices de chaque zone de montage sont agencés de manière coaxiale les uns par rapport aux autres. Ainsi, la zone de liaison B formée par l'assemblage de ces zones de montage comporte alors les parties de fixation C comprenant chacune un orifice. Les surfaces extérieures de ces parties de fixation C qui correspondent à celles de ces zones de montage, sont aptes à coopérer avec les vis insérées dans ces orifices et les écrous montés sur ces vis.

En effet, lors de cet assemblage, une première vis permet de fixer la zone de montage de l'élément de support 2 à la portion de la deuxième partie 9b du fond de la partie creuse 8 constituant la zone de montage du bras inférieur 3. Deux autres vis permettent également d'assembler la zone de montage de l'élément de support 2 aux rebords 11, notamment aux premières ailes 11a.

Sur les figures 1 et 2, les éléments de maintien 4 forment avec les parties de fixation C avec lesquelles ils coopèrent, des points de fixation : un point de fixation central et deux points de fixation périphériques. Les parties de fixation C et donc les points de fixation, sont décalés en hauteur du fait de la forme particulière de la zone de liaison B du bras de suspension 1. En effet, au moins deux parties de fixation C sont comprises dans des plans P1, P2 qui sont alors tangents à une interface de fixation au niveau des éléments de maintien 4. On entend, par « interface de fixation », une surface au niveau de laquelle le bras inférieur 3 et l'élément de support 2 de rotule sont en contact notamment au niveau des points de fixation.

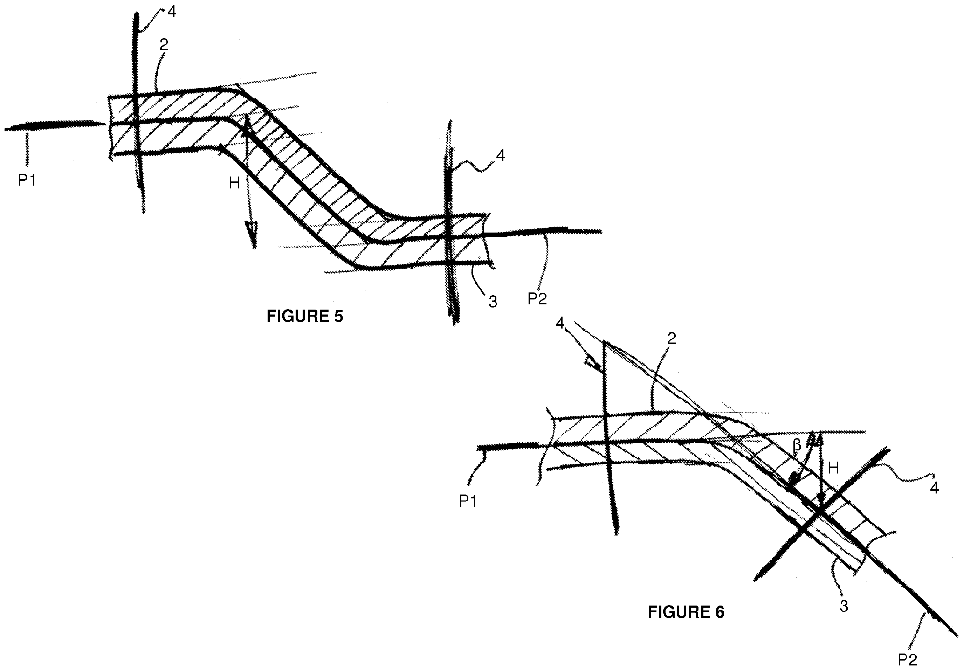

Ces plans P1, P2 visibles sur la figure 5, peuvent être parallèles et présenter alors un écart H d'environ 5 à 10 mm et de préférence de 7 mm. Dans cette configuration de la zone de liaison B, où les deux parties de fixation sont comprises dans des plans P1, P2 parallèles, l'écart H correspond à la distance entre les deux plans P1, P2.

Dans une configuration de la zone de liaison B visible sur la figure 6, où les deux parties de fixation sont comprises dans des plans P1, P2 non parallèles, l'écart H correspond à la plus petite des distances entre les points de fixation mesurées perpendiculairement à chacun des plans P1, P2. De plus, ils ont un écart angulaire β qui est compris entre environ 10 et 45 degrés, de préférence de 30 degrés.

Les deux éléments de maintien 4 coopérant avec ces parties de fixation C résultant de l'assemblage de la zone de montage de l'élément de support 2 avec les premières ailes des rebords 11 du bras inférieur 3, forment les deux points de fixation périphériques qui sont compris dans le même plan P2. L'élément de maintien 4 coopérant avec la partie de fixation formée par l'assemblage de la zone de montage de l'élément de support 2 avec la portion de la deuxième partie 9b du fond de la partie creuse 8 forme le point de fixation central. Ainsi, ce point de fixation central est compris dans le plan P1 présentant l'écart H avec le plan P2 comprenant les points de fixation périphériques.

Sur la figure 2, le point de fixation central présente avec chacun des points de fixation périphériques respectivement des écarts d1 et d2 sensiblement similaires qui sont d'environ 30 mm à 50 mm et de préférence de 35 mm. La somme de ces écarts d1 et d2 correspond à la distance d qu'il y a entre les points de fixation périphériques.

Lorsque dans une variante, seuls deux points de fixation assurent le montage solidaire de l'élément de support 2 sur le bras inférieur 3, ceux-ci correspondent alors à des points de fixation central et périphérique. Une telle configuration est particulièrement adaptée aux chocs latéraux que peuvent subir la roue et par extension le bras de suspension 1 auquel elle est reliée.

On comprend donc que l'assemblage solidaire de l'élément de support 2 avec le bras inférieur 3 se fait selon un étagement des points de fixation et donc des éléments de maintien 4 coopérant avec les parties de fixation C.

Ainsi que nous l'avons vu précédemment, l'élément de support 2 comporte le logement 15 prévu pour recevoir la rotule 13. Le logement 15 est illustré sur les figures 3 et 4 sur lesquelles la rotule 13 n'a pas été représentée afin que le logement 15 puisse être représenté.

Le logement 15 présente une forme sensiblement cylindrique et creuse et possède une ouverture 10 à son sommet. Ce logement 15 et notamment son fond 16, visible sur la figure 2, est compris sensiblement dans un même plan que la deuxième partie 9b du fond de la partie creuse 8 de la zone de montage du bras inférieur 3.

Ce logement 15 comprend également un élément d'appui 14 constituant une extrémité de l'élément de support 2, qui est situé en saillie du pourtour de la paroi cylindrique du logement 15. On notera que cet élément d'appui 14 est apte notamment lors d'un choc latéral subi par la roue, à prendre appui sur une surface intérieure d'un disque de frein monté au niveau de cette roue et orientée vers l'intérieur du véhicule en regard du porte-fusée et de l'élément de support 2. Un tel élément d'appui contribue à diriger la déformation programmée du bras de suspension 1.

La rotule 13 qui est agencée mobile dans ce logement 15, est reliée au porte-fusée par l'intermédiaire d'une queue ou bras de rotule afin d'assurer une liaison pivot avec ce dernier.

On notera que la rotule 13 et l'élément de support 2 présentent des axes longitudinaux qui sont sensiblement perpendiculaires.

L'élément de support 2 est réalisé en matériau métallique par exemple en fonte ou en acier forgé.

En référence à la figure 1, le bras de suspension 1 peut comporter un élément de renfort 17. Cet élément de renfort 17 est de préférence agencé au niveau du bras inférieur 3 et en particulier, chacune de ses extrémités est fixée sur un rebord 11 du bras inférieur 3, notamment sur la première aile 11a de ce rebord 11.

Sur les figures 3 et 4 sont représentées des vues du bras de suspension 1 déformé suite à un choc.

Ainsi que nous l'avons déjà évoqué, ce choc peut être longitudinal ou encore latéral. Lorsque la roue subit un tel choc, elle s'écrase contre le bras de suspension 1 en absorbant une certaine partie de l'énergie de l'impact. Sous l'effet de ce choc, le bras de suspension 1 se déforme.

Sur la figure 3, le bras de suspension 1 illustré s'est déformé sous l'action d'un choc longitudinal et celui représenté sur la figure 4, sous celle d'un choc latéral.)

Une telle déformation du bras de suspension 1 est dirigée selon une ligne fictive 18 de déformation visible sur ces figures 3 et 4. Cette ligne fictive 18 de déformation traverse le bras inférieur 3 au niveau des rebords 11 et de l'ouverture 10 de ce dernier. Cette ligne fictive 18 de déformation est comprise dans une zone A dite de fusibilité qui est localisée au niveau du bras inférieur 3 et pas au niveau de la zone de liaison B du bras de suspension 1 comme c'est le cas dans l'art antérieur. Plus précisément, cette zone de fusibilité A est située sur le bras inférieur 3 entre l'extrémité de la zone B et les articulations 6 et 7 et plus précisément dans la zone 9c.

La localisation de cette ligne fictive 18 dans la zone de fusibilité A résulte en partie du décalage des éléments de maintien 4 qui sont compris dans les plans P1, P2 distincts et tangents à l'interface de fixation. En effet, ce décalage résultant du fait qu'au moins deux parties de fixation C sont comprises dans les plans P1, P2 différents, permet d'apporter de l'inertie au niveau de la zone de liaison B du bras de suspension 1.

On comprend donc que cette zone de liaison B présente une résistance aux chocs latéraux et longitudinaux du bras de suspension 1 qui est importante en comparaison des autres parties de ce bras 1, comme notamment celles situées au niveau de l'ouverture 10. Grâce à cette configuration, on éloigne la zone de fusibilité A du bras de suspension 1 de l'élément de support 2 et donc de la rotule 13 évitant ainsi son décapsulage du logement 15.

Ainsi, avec une zone de fusibilité A localisée au niveau du bras inférieur 3, la liaison du bras de suspension 1 avec le porte-fusée est conservée après un choc latéral ou longitudinal.

Avantageusement, lorsque le bras de suspension 1 est déformé il n'est plus nécessaire de le changer entièrement en vue de réparer un véhicule qui aurait subi un choc latéral ou longitudinal. En effet, un simple changement du bras inférieur est alors suffisant car l'élément de support 2 du bras de suspension 1 n'est pas endommagé.

Par ailleurs, le dimensionnement du bras de suspension 1 peut être configuré pour que la ligne fictive 18 de déformation soit préférentiellement comprise dans cette zone de fusibilité A.

En effet, la hauteur h et la longueur L de la deuxième aile 11b de chaque rebords 11, la taille et/ou la forme de l'ouverture 10 ou encore l'angle formé par les plans comprenant les première 9a et deuxième 9b parties du fond du bras inférieur 3 peuvent être configurés de sorte à pourvoir définir la ligne fictive 18 de déformation qui soit comprise dans la zone de fusibilité A et ainsi obtenir lors d'un choc longitudinal ou latéral une déformation programmée.

En complément, l'élément de renfort évoqué précédemment peut également être ajouté afin de contribuer à la définition de cette ligne fictive 18 de déformation.

S'agissant de la deuxième aile 11b, on notera qu'en augmentant sa hauteur h on augmente la résistance à l'effort de la partie du bras inférieur 3 où est comprise cette deuxième aile 11b, et en diminuant cette hauteur h on obtient alors un effet inverse.

De même pour l'ouverture 10, en augmentant sa taille on diminue la résistance à l'effort résultant d'un choc du bras inférieur 3 et à l'inverse lorsque l'on diminue cette taille, la résistance à l'effort du bras inférieur 3 augmente.

La présente invention n'est pas limitée au mode de réalisation qui a été explicitement décrit, mais elle en inclut les diverses variantes et généralisations contenues dans le domaine des revendications ci-après.

## Revendications

1. Bras de suspension (1) pour véhicule automobile formé d'un bras (3), d'un élément de support (2) de rotule et des éléments de maintien (4) formant des points de fixation du bras (3) avec l'élément de support (2), le bras de suspension (1) comprenant au moins deux plans distincts tangents à une interface de fixation au niveau de deux éléments de maintien (4), **caractérisé en ce qu'**il comprend une zone de liaison (B) formée par des zones de montage de l'élément de support (2) et de la première extrémité (5) du bras (3), lesquelles zones de montage ayant des formes complémentaires, la zone de liaison (B) présentant une section transversale en forme de Ω.

2. Bras de suspension (1) selon la revendication précédente, **caractérisé en ce que** le bras (3) comporte une partie creuse (8) ayant un fond pourvu d'une ouverture (10).

3. Bras de suspension (1) selon l'une quelconque des revendications précédentes, **caractérisé en ce que** le bras (3) comporte trois extrémités (5, 6, 7).

4. Bras de suspension (1) selon la revendication précédente, **caractérisé en ce que** chaque rebord (11) comporte une deuxième aile (11b) dont la hauteur (h) évolue le long du bras (3).

5. Bras de suspension (1) selon l'une quelconque des revendications 2 à 4, **caractérisé en ce que** le fond de la partie creuse (8) est formé de première (9a) et deuxième (9b) parties présentant des profondeurs différentes, lesquelles sont reliées entre elles par un embouti intérieur (9c).

6. Bras de suspension (1) selon l'une quelconque des revendications précédentes, **caractérisé en ce qu'**il comprend trois parties de fixation (C) dont deux sont comprises dans un même plan (P2).

7. Bras de suspension (1) selon l'une quelconque des revendications précédentes, **caractérisé en ce qu'**il a une forme sensiblement triangulaire.

8. Véhicule comprenant un bras de suspension (1) selon l'une quelconque des revendications 1 à 7.

## Patentansprüche

1. Fahrwerkslenker (1) für ein Kraftfahrzeug, welcher von einem Arm (3), einem Kugelgelenk-Trägerelement (2) und Halteelementen (4), welche Befestigungspunkte des Armes (3) an dem Trägerelement (2) bilden, gebildet wird, wobei der Fahrwerkslenker (1) wenigstens zwei verschiedene Ebenen umfasst, die tangential zu einer Befestigungsschnittstelle an zwei Halteelementen (4) verlaufen, **dadurch gekennzeichnet, dass** er einen Verbindungsbereich (B) umfasst, der von Montagebereichen des Trägerelements (2) und des ersten Endes (5) des Armes (3) gebildet wird, wobei die Montagebereiche komplementäre Formen aufweisen, wobei der Verbindungsbereich (B) einen Ω-förmigen Querschnitt aufweist.

2. Fahrwerkslenker (1) nach dem vorhergehenden Anspruch, **dadurch gekennzeichnet, dass** der Arm (3) einen hohlen Teil (8) umfasst, der einen Boden aufweist, der mit einer Öffnung (10) versehen ist.

3. Fahrwerkslenker (1) nach einem der vorhergehenden Ansprüche, **dadurch gekennzeichnet, dass** der Arm (3) drei Enden (5, 6, 7) aufweist.

4. Fahrwerkslenker (1) nach dem vorhergehenden Anspruch, **dadurch gekennzeichnet, dass** jeder Rand (11) einen zweiten Schenkel (11b) aufweist, dessen Höhe (h) sich entlang des Armes (3) ändert.

5. Fahrwerkslenker (1) nach einem der Ansprüche 2 bis 4, **dadurch gekennzeichnet, dass** der Boden des hohlen Teils (8) von einem ersten (9a) und einem zweiten (9b) Teil gebildet wird, die unterschiedliche Tiefen aufweisen und die durch eine innere Einstülpung (9c) miteinander verbunden sind.

6. Fahrwerkslenker (1) nach einem der vorhergehenden Ansprüche, **dadurch gekennzeichnet, dass** er drei Befestigungsteile (C) umfasst, von denen zwei in derselben Ebene (P2) enthalten sind.

7. Fahrwerkslenker (1) nach einem der vorhergehenden Ansprüche, **dadurch gekennzeichnet, dass** er eine im Wesentlichen dreieckige Form aufweist.

8. Fahrzeug, welches einen Fahrwerkslenker (1) nach einem der Ansprüche 1 bis 7 umfasst.

## Claims

1. Suspension arm (1) for a motor vehicle, formed from an arm (3), a ball support element (2) and holding elements (4) forming fixing points for the arm (3) with the support element (2), the suspension arm (1) comprising at least two separate planes tangential to a fixing interface at two holding elements (4), **characterized in that** it comprises a connecting zone (B) formed by mounting zones for the support element (2) and the first end (5) of the arm (3), which mounting zones have complementary forms, the connecting zone (B) having a transverse section of Ω shape.

2. Suspension arm (1) according to the preceding claim, **characterized in that** the arm (3) comprises a hollow part (8) with a base provided with an opening (10).

3. Suspension arm (1) according to any one of the preceding claims, **characterized in that** the arm (3) comprises three ends (5, 6, 7).

4. Suspension arm (1) according to the preceding claim, **characterized in that** each edge (11) comprises a second wing (11b), the height (h) of which develops along the arm (3).

5. Suspension arm (1) according to any one of Claims 2 to 4, **characterized in that** the base of the hollow part (8) is formed from first (9a) and second (9b) parts with different depths which are connected together by an inner stamping (9c).

6. Suspension arm (1) according to any one of the preceding claims, **characterized in that** it comprises three fixing parts (C), two of which lie in the same plane (P2).

7. Suspension arm (1) according to any one of the preceding claims, **characterized in that** it has a substantially triangular form.

8. Vehicle comprising a suspension arm (1) according to any one of Claims 1 to 7.
